# EUROPEAN PATENT APPLICATION

(11) **EP 0 677 462 A1**
(43) Date of publication of application: **18.10.1995**
(21) Application number: 95105449.3
(22) Date of filing: 11.04.1995
(51) Int. Cl.: B65G 47/31, B65B 35/44

(54) **Line for supplying products to a user machine**

(30) Priority: 12.04.1994 IT BO940154
(71) Applicant: AZIONARIA COSTRUZIONI MACCHINE AUTOMATICHE-A.C.M.A.-S.p.A., I-40128 Bologna (IT)
(72) Inventor: Spatafora, Mario, I-40100 Bologna (IT)
(74) Representative: Jorio, Paolo

(57) **Abstract**

A line (1) for supplying products (4) to a user machine (6), wherein a conveyor (7) for supplying a succession (3) of products (4) at a first speed (V1) is connected by a timing device (8) to an input conveyor (5) for supplying the products (4) successively to the user machine (6) at a second speed (V2) greater than the first (V1); the timing device (8) presenting two opposed belts (40) movable at the second speed (V2) and movable transversely towards each other to successively grip and launch the products (4) towards the input conveyor (5) at the second speed (V2) and in time with the input conveyor (5).

## Description

The present invention relates to a line for supplying products to a user machine.

The present invention is particularly advantageous for supplying sweets or chocolates to a wrapping machine, to which application the following description refers purely by way of example.

In the confectionery industry, sweets or chocolates, hereinafter referred to as "products", are normally supplied successively to a wrapping machine by a supply line normally comprising a feed conveyor for receiving the products from a dispensing device and arranging them in an orderly succession in which the products are arranged contacting one another and advance at substantially the same rate but at a slower speed as compared with the intake rate and speed of the wrapping machine.

To bring the products up to the intake speed of the wrapping machine, and so supply them in perfect time with the wrapping machine, the supply line normally comprises an accelerating device, e.g. of the type described in European Patent Application n. 543 211. This comprises a suction disk with a succession of suction inlets presenting the same spacing as the intake spacing of the wrapping machine, a traveling speed equal to the intake speed of the wrapping machine, and each of which provides for picking up a product and feeding it to and in time with the wrapping machine.

On a supply line of the above type, the products are fed directly by the feed conveyor on to the periphery of the suction disk which functions both as an accelerating and timing device. Though highly advantageous by enabling a drastic reduction in production cost and the number of components employed, such a solution results in the products, pending pickup, sliding in contact with the disk and therefore not only being damaged by rubbing against the surface of the disk, but also being advanced incorrectly due to the difference between the surface speed of the disk and the traveling speed of the feed conveyor.

It is an object of the present invention to provide a supply line designed to overcome the aforementioned drawback.

According to the present invention, there is provided a line for supplying products to a user machine, the line comprising a feed conveyor for feeding a succession of products at a first speed and at a given rate; and an input conveyor for successively feeding the products to the user machine at said given rate and at a second speed greater than the first; characterized in that it also comprises a timing device interposed between the feed conveyor and the input conveyor; the timing device comprising gripping means movable at the second speed and by which the products are gripped and launched successively towards the input conveyor at the second speed and in time with the input conveyor.

According to a preferred embodiment of the above line, the gripping means comprise two opposed belts movable at the second speed; and actuating means connected to and for moving the belts transversely towards each other so as to successively grip the products.

A non-limiting embodiment of the present invention will be described by way of example with reference to the accompanying drawings, in which:
Figure 1 shows a side view, with parts in section and parts removed for clarity, of a preferred embodiment of the supply line according to the present invention;
Figure 2 shows a plan view, with parts in section and parts removed for clarity, of a first detail of the Figure 1 line;
Figure 3 shows a front view, with parts removed for clarity, of the Figure 2 detail;
Figure 4 shows a section along line IV-IV in Figure 2;
Figure 5 shows a section along line V-V in Figure 4;
Figure 6 shows a schematic diagram, with parts in section and parts removed for clarity, of a second detail of the Figure 1 line.

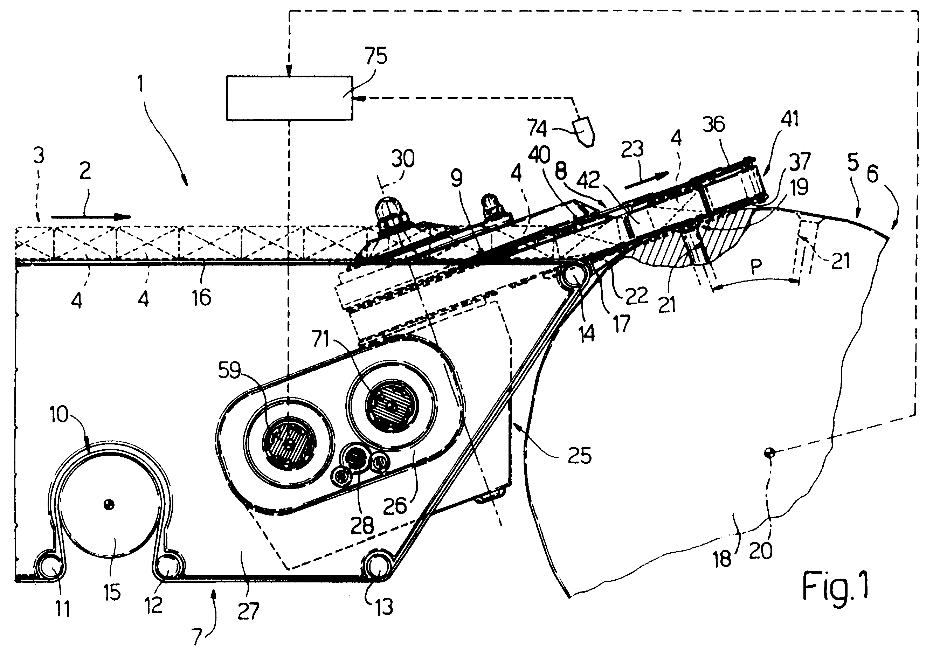

Number 1 in Figure 1 indicates a supply line for feeding an orderly succession 3 of products 4 - in the example shown, chocolates - in a substantially horizontal direction 2 to its output defined by the input conveyor 5 of a wrapping machine 6.

In addition to conveyor 5, line 1 comprises a conveyor belt 7 parallel to direction 2; and a timing device 8 connected to the output portion 9 of conveyor 7.

Conveyor 7 provides for feeding succession 3 to device 8, and is defined by a belt 10 looped about a number of pulleys - shown only partly and numbered 11-15 - rotating about respective substantially horizontal axes crosswise to direction 2. Pulleys 11-14 are idle guide pulleys, whereas pulley 15 is a drive pulley powered by a motor (not shown), for feeding the transportation branch 16 of belt 10 in direction 2 and at a speed V1 specified in detail later on.

Timing device 8 provides for receiving succession 3 of products 4 from conveyor 7 via a brake device 17, and for feeding single products 4 on to input conveyor 5.

Input conveyor 5 comprises a wheel 18 for receiving products 4 from device 8 at a transfer station 19, and which is rotated, by drive means not shown, about a substantially horizontal axis 20 crosswise to direction 2, and at a surface speed V2 greater than speed V1. Wheel 18 is positioned with its periphery facing output portion 9 of conveyor 7, and presents a number of substantially radial suction holes 21 equally spaced about its periphery with a spacing P equal to the substantially constant intake spacing of machine 6.

As shown in Figure 1, brake device 17 comprises a fixed plate 22 tangent to the periphery of wheel 18, and which provides for directing products 4 in a direction 23 sloping upwards in relation to direction 2 and also tangent to the periphery of wheel 18.

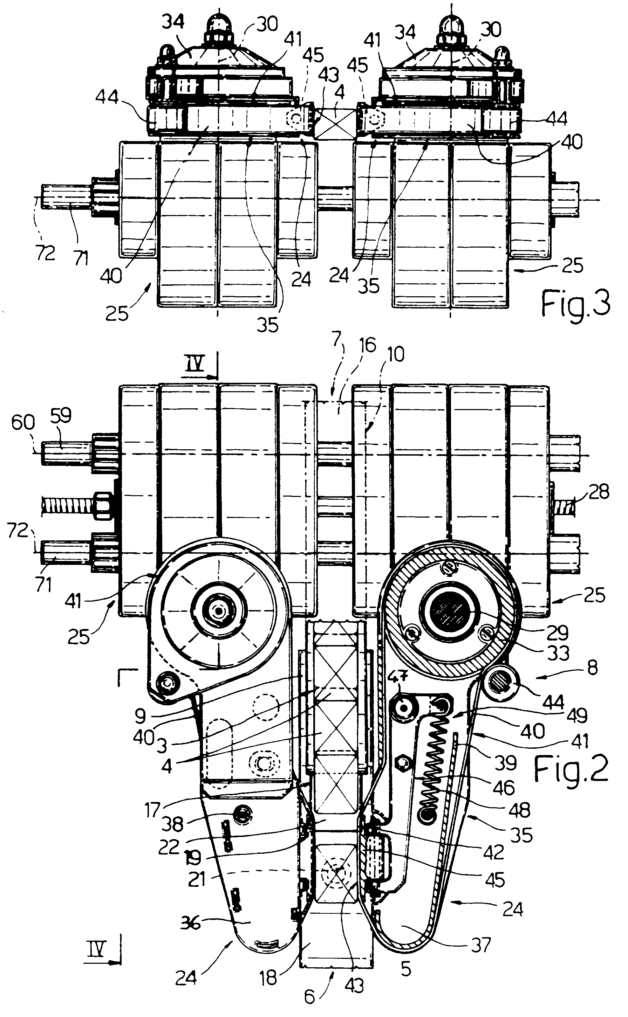

As shown in Figure 2, timing device 8 is a gripping device comprising two opposed, substantially similar gripping members 24 located on either side of plate 22, and movable in relation to each other over plate 22 to grip products 4 at the output of feed conveyor 7.

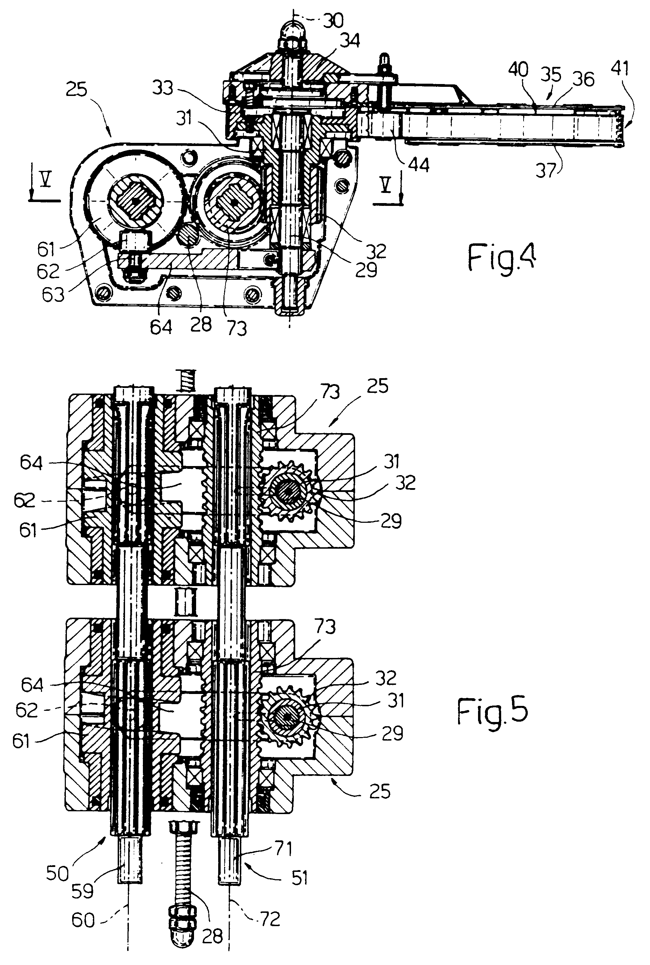

As shown in Figures 2 and 4, each member 24 comprises a box body 25 supported, via the interposition of a bracket 26 (Figure 1), on frame 27 of conveyor 7, and presenting (Figure 5) an adjusting screw 28 connecting and for adjusting the distance between the two bodies 25. Each body 25 extends substantially parallel to axis 20, and is fitted through with a respective shaft 29, the axis 30 (Figure 1) of which is crosswise to both axis 20 and direction 23. Shaft 29 is supported in rotary manner by respective body 25, and in turn supports in rotary manner a bush 31 fitted with a helical-toothed gear 32 inside body 25, and a pulley 33 located over body 25.

The end of shaft 29 outside body 25 is fitted with a bell 34 in turn fitted with a radial box appendix 35 extending substantially parallel to direction 23 and comprising a top and bottom plate 36, 37 crosswise to axis 30 and located, along axis 30, on either side of pulley 33. As shown in Figure 2, plates 36 and 37 are connected by a screw 38, and are kept apart by a curved wall 39 located along the free end portion of and defining the lateral wall of appendix 35. About pulley 33 and wall 39, there is looped a belt 40 defining, with pulley 33 and wall 39, a launching conveyor 41, the transportation branch 42 of which extends substantially parallel to direction 23, and is positioned facing the transportation branch 42 of the other gripping member 24, so as to define a channel 43 extending over plate 22 in direction 23.

As shown in Figure 2, each belt 40 extends, not only in contact with respective pulley 33 and respective wall 39, but also in contact with an outer pressure pulley 44 fitted idly to respective bell 34, and with an inner shoe 45 located between plates 36 and 37, to the side of plate 22, and connected to a free end of a rocker arm 46 located between plates 36 and 37 and mounted for rotation on an intermediate pin 47 parallel to axis 30. The other free end of rocker arm 46 is connected to plate 37 by means of a spring 48 for pushing shoe 45 outwards towards the other shoe 45. The whole formed by shoe 45, rocker arm 46 and spring 48 defines a tensioning device 49 for tensioning respective belt 40 and, as explained in more detail later on, softening the impact between belts 40 and product 4.

Each gripping member 24 is connected to two actuating devices 50 and 51 common to both members 24, and the first of which provides for oscillating shafts 29 in opposite directions, and the second for rotating bushes 31 and hence respective pulleys 33 in opposite directions.

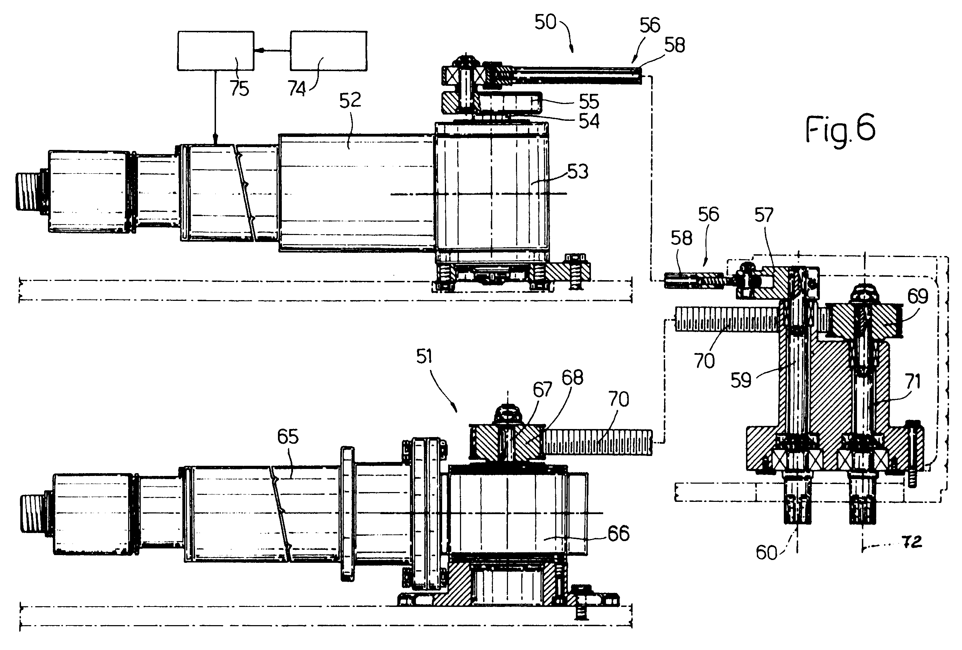

As shown in Figure 6, actuating device 50 comprises a motor 52 with an output reduction gear 53, the output shaft 54 of which is fitted with the rotary crank 55 of an articulated, rotary and oscillating crank parallelogram 56, the oscillating crank 57 of which is connected to rotary crank 55 by a connecting rod 58, and is fitted to a shaft 59 oscillating about an axis 60 crosswise to axes 30 and direction 23. As shown in Figures 4 and 5, shaft 59 extends through both bodies 25, and is fitted with two face cams 61, each housed inside a respective body 25 and engaged by a tappet roller 62 mounted for rotation on a pin 63 with its axis parallel to respective axis 30 and in turn fitted to the free end of an arm 64 perpendicular to respective axis 30, and the other end of which is fitted to respective shaft 29.

As shown in Figure 6, actuating device 51 comprises a motor 65 with an output reduction gear 66, the output shaft 67 of which is fitted with a toothed pulley 68 connected by a drive belt 70 to a further toothed pulley 69 fitted to a shaft 71 rotating about an axis 72 parallel to axis 60. As shown in Figure 5, shaft 71 extends through both bodies 25, and is fitted with two oppositely helical worm screws 73, each housed inside a respective body 25 and meshing with a respective gear 32.

In actual use, transportation branch 16 of belt 10 of conveyor 7 advances succession 3 of products 4 in direction 2 and at speed V1 until the first product 4 in succession 3 reaches brake device 17 by which products 4 are slowed down and brought into contact with one another. Once the clearance between adjacent products 4 has been taken up, succession 3 is again advanced at speed V1 so as to feed the first product 4 into channel 43 defined by belts 40 of timing device 8.

In connection with the traveling speed V1 of belt 10, it should be pointed out that said speed is such as to feed products 4 into channel 43 at a rate equal to that at which holes 21 travel through transfer station 19, but is less than the speed V2 at which holes 21 travel through transfer station 19, in that, as shown clearly in Figure 1, the spacing P of holes 21 about the peripheral surface of wheel 18 is greater than the length of product 4.

In connection with timing device 8, it should be pointed out that motor 65 is activated together with pulley 15, and remains on as long as conveyor 7 is operative; whereas motor 52 is normally off, and is activated by a control unit 75 upon this receiving a signal from a sensor 74 for detecting the passage of each product 4 along plate 22.

Upon said first product 4 traveling along plate 22 at speed V1, the signal emitted by sensor 74 and a further signal emitted by an encoder (not shown) connected to axis 20 enable control unit 75 to calculate the time T required by the first upstream hole 21 to reach station 19, and, at the same time, to calculate a division of time T into two parts T1 and T2 so that the first product 4 traveling at speed V1 for time T1 reaches an intermediate point of channel 43 between shoes 45, and, traveling at speed V2 for time T2 as of said intermediate point, reaches station 19 in time with the relative hole 21.

Upon being detected by sensor 74, said first product 4 therefore travels along channel 43 at speed V1, i.e. is pushed along by the other products 4 in succession 3, for time T1 until it is at least partly inserted between shoes 45. At this point, control unit 75 activates motor 52 which, by rotating cams 61, rotates shafts 29 in opposite directions to grip the first product 4 between conveyors 41. The first product 4 is thus brought into contact with belts 40 by which it is accelerated substantially instantaneously from speed V1 to speed V2 and fed to station 19 in time with the relative hole 21.

To prevent any damage to product 4, tensioning devices 49 provide for softening the impact between belts 40 and product 4 as appendixes 35 are brought together.

At the end of time T2, appendixes 35 are restored to the original position by deactivating motor 52, and the above cycle is repeated for each successive product 4.

## Claims

1. A line for supplying products (4) to a user machine (6), the line (1) comprising a feed conveyor (7) for feeding a succession of products (4) at a first speed (V1) and at a given rate; and an input conveyor (5) for successively feeding the products (4) to the user machine (6) at said given rate and at a second speed (V2) greater than the first (V1); characterized in that it also comprises a timing device (8) interposed between the feed conveyor (7) and the input conveyor (5); the timing device (8) comprising gripping means (24) movable at the second speed (V2) and by which the products (4) are gripped and launched successively towards the input conveyor (5) at the second speed (V2) and in time with the input conveyor (5).

2. A line as claimed in Claim 1, characterized in that said gripping means (24) comprise two opposed belts (40) movable at the second speed (V2); and actuating means (50) connected to and for moving the belts (40) transversely towards each other so as to successively grip the products (4).

3. A line as claimed in Claim 2, characterized in that it comprises a tensioning shoe (45) for each said belt (40); the two belts (40) being located between said shoes (45); said shoes (45) being positioned facing each other; and elastic thrust means (48) being provided for positioning each shoe (45) in contact with the relative belt (40).

4. A line as claimed in Claim 1, 2 or 3, characterized in that the feed conveyor (7) and the timing device (8) respectively provide for feeding the products (4) in a first (2) and second direction (23) forming a given angle.

5. A line as claimed in Claim 4, characterized in that said two directions (2, 23) are coplanar; said second direction (23) sloping upwards in relation to the first direction (2).

6. A line as claimed in any one of the foregoing Claims, characterized in that it comprises braking means (17) downstream from the feed conveyor (7) and for ordering said succession (3).

7. A line as claimed in Claims 5 and 6, characterized in that said braking means (17) comprise a plate (22) along which said products (4) slide; said plate (22) being oriented in said second direction (23).

8. A line as claimed in any one of the foregoing Claims from 2 to 7, characterized in that the timing device (8) comprises two side by side launching conveyors (41), each in turn comprising a supporting element (35) about which the relative launching conveyor (41) is looped; each of said opposed belts (40) being defined by the transportation branch (42) of a respective said launching conveyor (41).

9. A line as claimed in Claim 7, characterized in that said supporting elements (35) are so mounted as to oscillate about respective axes (30) crosswise to the second direction (23), parallel to each other, and located a given distance apart; said actuating means (50) being connected to said supporting elements (35).

10. A line as claimed in Claim 8, characterized in that it comprises adjusting means (28) for adjusting said given distance.
